# EUROPEAN PATENT APPLICATION

(11) **EP 4 793 882 A1**
(43) Date of publication of application: **19.08.2026**
(21) Application number: 24877373.1
(22) Date of filing: 31.07.2024
(51) Int. Cl.: G06T 5/70, G06T 3/4015, G06N 20/00

(54) **DEEP LEARNING-BASED IMAGE NOISE REDUCTION DEVICE AND METHOD**

(30) Priority: 10.10.2023 KR 20230134434
(71) Applicant: 4 by 4 Inc., Seoul 06541 (KR); Aination Co., Ltd., Seoul 06771 (KR)
(72) Inventor: YUN, Junho, Seoul 06541 (KR); OH, Heungmin, Seoul 06541 (KR); KIM, Hyeongseock, Seoul 06541 (KR); KIM, Jinah, Seoul 06541 (KR); KWAK, Jihoon, Seoul 06771 (KR); CHOI, Ho Jin, Seoul 06771 (KR)
(74) Representative: Murgitroyd & Company
(86) International application number: PCT/KR2024/011268
(87) International publication number: WO 2025/079834

(57) **Abstract**

The present disclosure relates to a deep learning-based image noise reduction device and method. The deep learning-based image noise reduction device according to an embodiment of the present disclosure includes: a first noise reduction module for acquiring a first image in which noise of an input image having an RGB color space is reduced; a first color space conversion module for acquiring a second image converted from the first image, so as to have a YCbCr color space; a second color space conversion module for acquiring a third image converted from the input image, so as to have only a luminance attribute from among attributes of the YCbCr color space; a second noise reduction module for acquiring a fourth image in which noise of the third image is reduced; an attribute combination module for generating a fifth image in which additional noise is reduced from the first image by using the luminance attribute and chrominance attribute of the second image and the luminance attribute of the fourth image; and a third color space conversion module for acquiring an output image converted from the fifth image, so as to have the RGB color space.

## Description

### [Technical Field]

The present disclosure relates to a deep learning-based image noise reduction device and method, and more particularly, to a deep learning-based image noise reduction device and method which output an image in which a color noise and a luminance noise included in the image are reduced using deep learning.

### [Background Art]

In accordance with improvement of a resolution and a color reproduction ability of a screen, demands for an enhanced image quality of an image have increased and in accordance with the demands, images are improved by denoising, super-resolution, and color correction.

Specifically, denoising is a task for reducing a noise from images or videos and such noise includes a color noise which randomly occurs in an RGB color space and distorts an image color, a luminance noise which frequently occurs in a low illuminance condition and is expressed by random fluctuation in brightness, and a time-dependent noise which occurs when brightness and colors between adjacent frames are not consistently maintained.

Such image improvement requires an expert to manually reduce a noise of the image using image editing tools, so that there is a problem in that a significant amount of manual work by an image editing expert is necessary.

Accordingly, in order to automate the image improvement, various studies have recently been conducted to denoise an image/video by utilizing deep learning. Among them, SwinIR performs image denoising by applying a transformer structure which is one of modules which are actively being studied in the recent deep learning fields and NAFNet performs image denoising by removing an unnecessary activation function and modifying a composite model structure to be suitable for denoising. However, the transformer model requires a long training and inference time and shows a tendency that grayscale/luminance noise is not accurately corrected and the NAFNet has a problem of excessively losing details.

### [Disclosure]

### [Technical Problem]

An object of the present disclosure is to provide a deep learning-based image noise reduction device and method, and more particularly, a deep learning-based image noise reduction device and method which output an image in which a color noise and a luminance noise included in the image are reduced using deep learning.

### [Technical Solution]

According to an aspect, a deep learning-based image noise reduction device includes: a first noise reduction module for acquiring a first image in which a noise of an input image having an RGB color space is reduced; a first color space conversion module for acquiring a second image converted from the first image so as to have a YCbCr color space; a second color space conversion module for acquiring a third image converted from the input image so as to have only a luminance attribute, among attributes of the YCbCr color space; a second noise reduction module for acquiring a fourth image in which a noise of the third image is reduced; an attribute combination module for generating a fifth image in which an additional noise is reduced from the first image using the luminance attribute and the chrominance attribute of the second image and the luminance attribute of the fourth image; and a third color space conversion module for acquiring an output image converted from the fifth image so as to have the RGB color space.

At this time, the attribute combination module may calculate a new luminance attribute by combining a luminance attribute of the second image and a luminance attribute of the fourth image according to a predetermined condition and generate the fifth image which is generated so as to have the new luminance attribute and the chrominance attribute of the second image.

Further, the new luminance attribute is equal to or larger than a smaller value between the luminance attribute of the second image and the luminance attribute of the fourth image and equal to or smaller than a larger value therebetween.

Further, the attribute combination module may determine the new luminance attribute by the following Equation 1. (Y₃ is a new luminance attribute, p is a real number having a value in the range of 0 ≤ p ≤ 1, Y₁ is a luminance attribute of the second image, and Y₂ is a luminance attribute of the fourth image.)${Y}_{3} = {pY}_{1} + \left(1-p\right) {Y}_{2} .$

Further, the first noise reduction module and the second noise reduction module may be models which use a structure of a dilated-residual U-Net (DRUNet) model as a backbone.

Further, the first noise reduction module may be a module trained using a learning dataset in which "an original image which has an RGB color space and includes a noise" and "an image with a color noise and a luminance noise reduced from the original image" are paired.

Further, the second noise reduction module may be a module which is trained using a learning dataset in which "an image converted from an original image including a noise so as to have only a luminance attribute in the YCbCr color space" and "an image converted from an image with a luminance noise reduced from the original image so as to have only a luminance attribute in the YCbCr color space" are paired.

Further, the first noise reduction module may be a module trained using a learning dataset in which "an image obtained by adding a noise to an original image which has an RGB color space and includes a noise" and "an image with a color noise and a luminance noise reduced from the original image" are paired.

Further, the second noise reduction module may be a module which is trained using a learning dataset in which "an image converted from an image obtained by adding a noise to an original image including a noise so as to have only a luminance attribute in the YCbCr color space" and "an image converted from an image with a luminance noise reduced from the original image so as to have only a luminance attribute in the YCbCr color space" are paired.

Further, at least one of the first noise reduction module and the second noise reduction module may be a module which is trained using a learning dataset in which "an image obtained by adding a noise to an original image including a noise" and "the original image" are paired.

According to another aspect, a deep learning-based image noise reduction method is performed by a computing device including a first noise reduction module, a second noise reduction module, a first color space conversion module, a second color space conversion module, an attribute combination module, and a third color space conversion module and includes a step of acquiring a first image in which a noise of an input image having an RGB color space is reduced, in the first noise reduction module; a step of acquiring a second image converted from the first image so as to have a YCbCr color space, in the first color space conversion module; a step of acquiring a third image converted from the input image so as to have only a luminance attribute, among attributes of the YCbCr color space, in the second color space conversion module; a step of acquiring a fourth image in which a noise of the third image is reduced, in the second noise reduction module; a step of generating a fifth image with an additional noise reduced from the first image using the luminance attribute and the chrominance attribute of the second image and the luminance attribute of the fourth image, in the attribute combination module; and a step of acquiring an output image converted from the fifth image so as to have the RGB color space, in the third color space conversion module.

At this time, the step of acquiring a fifth image may further include: a step of calculating a new luminance attribute by combining a luminance attribute of the second image and a luminance attribute of the fourth image according to a predetermined condition; and a step of generating the fifth image generated so as to have the new luminance attribute and the chrominance attribute of the second image.

Further, in the step of determining a new luminance attribute, the new luminance attribute may be equal to or larger than a smaller value between the luminance attribute of the second image and the luminance attribute of the fourth image and equal to or smaller than a larger value therebetween.

Further, in the step of determining a new luminance attribute, the new luminance attribute may be determined by the following Equation 1. (Y₃ is a new luminance attribute, p is a real number having a value in the range of 0 ≤ p ≤ 1, Y₁ is a luminance attribute of the second image, and Y₂ is a luminance attribute of the fourth image.)${Y}_{3} = {pY}_{1} + \left(1-p\right) {Y}_{2} .$

Further, the first noise reduction module and the second noise reduction module may be models which use a structure of a dilated-residual U-Net (DRUNet) model as a backbone.

Further, the first noise reduction module may be a module trained using a learning dataset in which "an original image which has an RGB color space and includes a noise" and "an image with a color noise and a luminance noise reduced from the original image" are paired.

Further, the second noise reduction module may be a module which is trained using a learning dataset in which "an image converted from an original image including a noise so as to have only a luminance attribute in the YCbCr color space" and "an image converted from an image with a luminance noise reduced from the original image so as to have only a luminance attribute in the YCbCr color space" are paired.

Further, the first noise reduction module may be a module trained using a learning dataset in which "an image obtained by adding a noise to an original image which has an RGB color space and includes a noise" and "an image with a color noise and a luminance noise reduced from the original image" are paired.

Further, the second noise reduction module may be a module which is trained using a learning dataset in which "an image converted from an image obtained by adding another noise to an original image including a noise so as to have only a luminance attribute in the YCbCr color space" and "an image converted from an image with a luminance noise reduced from the original image so as to have only a luminance attribute in the YCbCr color space" are paired.

At least one of the first noise reduction module and the second noise reduction module may be a module which is trained using a learning dataset in which "an image obtained by adding a noise to an original image including a noise" and "the original image" are paired.

### [Advantageous Effects]

According to the present disclosure, an image in which a color noise and a luminance noise included in the image are reduced may be output.

Further, according to the present disclosure, as compared with a structure using one model, the color noise and the luminance noise included in the image are further reduced, thereby improving a quality of the image.

### [Description of Drawings]

FIG. 1 is a view illustrating a deep learning-based image noise reduction system according to an exemplary embodiment of the present disclosure.
FIG. 2 is a view illustrating an architecture of a DRUNet model.
FIG. 3 is a view illustrating an architecture of a residual block.
FIG. 4 is a view for defining a color space and an attribute type corresponding to an image type according to an exemplary embodiment of the present disclosure.
FIG. 5 is a view illustrating an input image and a noise reduction result according to an exemplary embodiment of the present disclosure.
FIG. 6 is a view illustrating a deep learning-based image noise reduction method according to an exemplary embodiment of the present disclosure.

### [Best Mode]

Advantages and characteristics of the present disclosure and a method of achieving the advantages and characteristics will be clear by referring to the preferred embodiments described below in detail together with the accompanying drawings. However, the present disclosure is not limited to exemplary embodiments disclosed herein but will be implemented in various different forms. The exemplary embodiments are provided by way of example only so that a person of ordinary skill in the art can fully understand the disclosures of the present disclosure and the scope of the present disclosure. Therefore, the present disclosure will be defined only by the scope of the appended claims.

The terms used in the present specification are for explaining the embodiments rather than limiting the present disclosure. Unless particularly stated otherwise in the present specification, a singular form also includes a plural form. The term "comprise" and/or "comprising" used in the specification does not exclude the presence or addition of one or more other components in addition to the mentioned component. Like reference numerals generally denote like elements throughout the specification and "and/or" includes each of mentioned components and all combinations of one or more components. Although the terms "first", "second", and the like are used for describing various components, these components are not confined by these terms. These terms are merely used for distinguishing one component from the other components. Therefore, a first component to be mentioned below may be a second component in a technical spirit of the present disclosure.

Unless otherwise defined, all terms (including technical and scientific terms) used in the present specification may be used as the meaning which may be commonly understood by the person with ordinary skill in the art, to which the present disclosure belongs. It will be further understood that terms defined in commonly used dictionaries should not be interpreted in an idealized or excessive sense unless expressly and specifically defined.

Hereinafter, exemplary embodiments of the present disclosure will be described in detail with reference to the accompanying drawings.

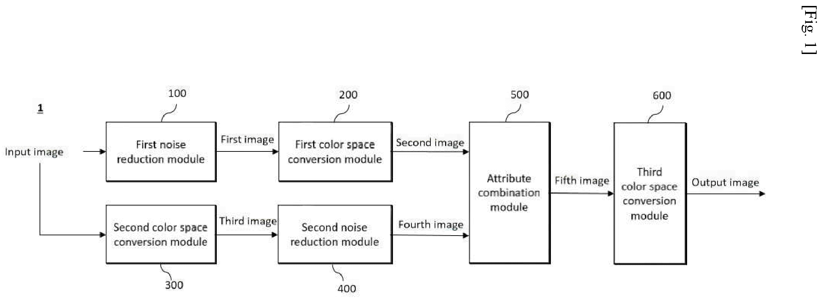

FIG. 1 is a view illustrating a deep learning-based image noise reduction system according to an exemplary embodiment of the present disclosure.

Referring to FIG. 1, a deep learning based-image noise reduction device 1 according to an exemplary embodiment of the present disclosure may include a first noise reduction module 100, a first color space conversion module 200, a second color space conversion module 300, a second noise reduction module 400, an attribute combination module 500, and a third color space conversion module 600.

The deep learning-based image noise reduction device 1 according to the exemplary embodiment of the present disclosure may receive an image corresponding to each frame of an image and reduce a noise included in the input image to acquire an image with an improved image quality. Here, the noise included in the image may include a color noise and a luminance noise. The color noise may refer to a noise in which a color different from an originally intended color, among colors representable in an RGB color space, appears, and the luminance noise may refer to a noise that occurs due to a difference in brightness from the originally intended color.

The deep learning-based image noise reduction device 1 may primarily reduce a color noise and a luminance noise from an image and secondarily compensate for the reduced luminance noise to acquire an image in which the color noise and the luminance noise are effectively reduced.

The first noise reduction module 100 may acquire a first image in which a noise of an input image having an RGB color space is reduced. The input image has an RGB color space and the color space is a space which three-dimensionally expresses a color system. Further, in the RGB color space, all colors of the color system are expressed as coordinates for red, green, and blue.

Here, the input image may be an image in which a target image to be denoised is converted to have a predetermined number of pixels. For example, the input image may have a pixel size of 128 × 128 in widths and heights, but is not limited thereto. That is, the first noise reduction module 100 may provide an input image having a predetermined number of pixels.

For example, when the number of pixels of the target image to be denoised is larger than a predetermined number of pixels, an input image may be generated in accordance with the predetermined number of pixels by removing some pixels of the target image to be denoised. Here, the target image may be converted to have a predetermined number of pixels by removing some pixels from an edge of the target image with respect to a center of the target image. Further, the target image may be converted to have a predetermined pixel size by removing some pixels which deviate from one point corresponding to the number of pixels in widths and heights with respect to one vertex of the target image.

Further, when the number of pixels of the target image to be denoised is larger than a predetermined number of pixels, the target image may be divided into a plurality of patches according to the predetermined number of pixels and the plurality of patches may be provided as input images.

The patch refers to one image obtained by dividing the target image and the number of pixels of one patch may be smaller than the number of pixels of the target image. Further, one patch may include a part of the target image. Here, one patch may be divided from the target image so as not to overlap at least another patch, but may also be divided from the target image so as to overlap the other patch. Further, each of the plurality of patches which is generated by dividing the target image may have the same number of pixels or different numbers of pixels.

In the meantime, when the number of pixels of the target image to be denoised is smaller than the predetermined number of pixels, the number of pixels of the target image to be denoised may be increased using a zero-padding technique. For example, pixels may be extended from pixels corresponding to the edge of the target image to increase the number of pixels and a value of 0 may be added to each of the increased pixels. As described above, the number of pixels of the target image is increased using the zero-padding technique to convert the target image to have a predetermined number of pixels. Here, the number of increased pixels may be different according to the number of pixels of the target image.

However, even though it has been described that the input image has a predetermined number of pixels, in the first noise reduction module 100, an input image having an unlimited number of pixels may be provided. For example, a resolution of an image to be processed by the first noise reduction module 100 may vary depending on a model applied to the first noise reduction module 100. Accordingly, the number of pixels of the input image may be set to various numbers without being limited.

The first noise reduction module 100 may be trained using a learning dataset in which "an original image which has an RGB color space and includes a noise" and "an image obtained by reducing a color noise and a luminance noise from the original image" are paired.

In another exemplary embodiment, the first noise reduction module 100 may be trained using a learning dataset in which "an image obtained by adding a noise to the original image" and "an original image" are paired.

In another exemplary embodiment, the first noise reduction module 100 may be trained using a learning dataset in which "an image obtained by adding a noise to the original image again" and "an image obtained by reducing a color noise and a luminance noise from the original image" are paired.

Specifically, a noise to be added to the original image may be a structural noise (for example, a structural noise with a size determined based on a standard deviation between "the original image" and the "image obtained by reducing a noise from the original image").

In the related art, a random noise was added to the original image using a method of adding a noise as much as a specific variance to each channel of the original image. However, in a noise included in an actually used image, a structural noise appears more frequently than a random noise. Accordingly, the method of adding a random noise has a difficulty in reflecting a structural noise pattern of the actually used image.

Therefore, according to another exemplary embodiment of the present disclosure, the noise size is adjusted based on the standard deviation of the original image and the image obtained by reducing a noise from the original image to add a structural noise to the original image.

As described above, when an image is generated by adding a structural noise to the original image, an effect of significantly improving a performance of the noise reduction module as compared with the image obtained by adding the random noise according to the related art can be expected.

A size of the noise added to the original image may be determined by the following Equation 1.$N = α \left(x-y\right) / σ + y .$

Here, N is a noise added to the original image, α is a value which is randomly extracted within a specific range, σ is a standard deviation of x - y, x is an RGB attribute value of the original image, and y is an RGB attribute value of an image denoised from the original image. Here, as the value of α is increased, the size of the noise is increased and more noises may be included in the original image.

Here, the first noise reduction module 100 learns an image obtained by adding an additional noise to the original image as input data to respond to various noise levels. That is, even though an image with a low image quality is input, an image which is effectively denoised may be output using the trained result.

When the input image having an RGB color space is input, the first noise reduction module 100 may output a first image which has a color noise and a luminance noise reduced from the input image and has an RGB color space using the trained result.

Further, the first noise reduction module 100 may be a model which uses a structure of dilated-residual U-net (DRUNet) model as a backbone.

Here, the DRUNet may be a model with a structure in which some of standard blocks used for the existing U-NET model are replaced with a residual block.

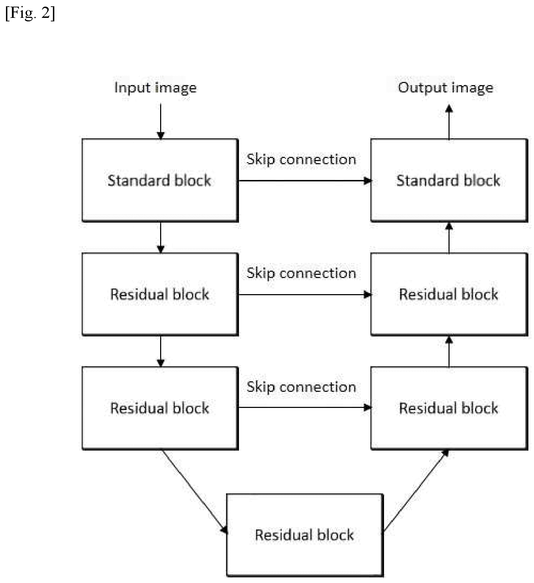

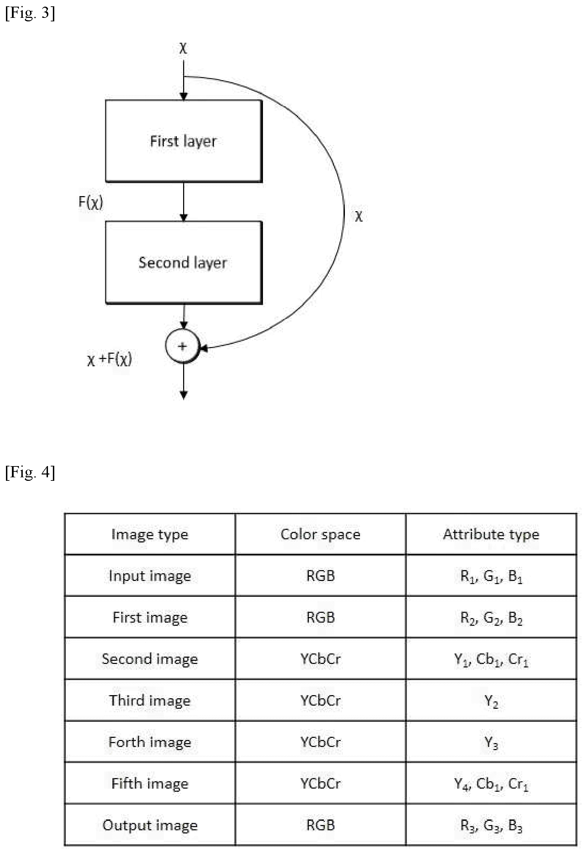

FIG. 2 is a view illustrating an architecture of a DRUNet model and FIG. 3 is a view illustrating an architecture of a residual block.

Referring to FIGS. 2 and 3, the U-NET structure may be a model which supplements a problem of a transformer model. In order to capture a feature of an input image during an encoding step, the transformer model reduces a dimensionality while increasing the number of channels and reduces the number of channels and increases a dimensionality using only information which is encoded to a low-dimensionality during a decoding step to restore a high-dimensional image. However, detailed position information about an image object is lost due to the reduction of the dimensionality during the encoding step and in the decoding step, only the low-dimensional information is used so that there is a problem in that the lost position information cannot be restored.

The U-NET structure identifies an accurate position for the image object using not only low-dimensional information, but also high-dimensional information to compensate for the problem of the transformer model. That is, the U-NET structure may accurately define a position for the object while reducing a size of the image by means of skip connection in which a feature obtained in each layer of the encoding step is added to each layer of the decoding step to improve an image quality of the image with higher accuracy.

Specifically, the U-NET structure is a neural network structure configured in a U-shape so that layers are symmetrically disposed with respect to the center and layers in a down-sampling process and layers in an up-sampling process may be connected by skip-connection. Here, each step of the down-sampling and the up-sampling may be configured by a standard block.

The DRUNet model is a model in which some of the standard blocks with the U-Net structure are replaced with the residual block and the residual structure may be a block with a connection in which a result value of one layer is input not only to a subsequent layer, but also to a layer several steps later.

For example, referring to FIG. 3, an input value x may be input to a first layer and a third layer. Further, an output value F(x) which is output from a second layer via the first layer and the second layer may also be input to the third layer. That is, the input value x and the output value F(x) output from the second layer may be input to the third layer and the third layer may output a result value using a value obtained by adding the input value x and the output value F(x) output from the second layer as an input. Further, the first noise reduction module 100 reuses the value output from the third layer as an input value for learning to be trained only with a small amount of data, to simplify a learning structure, and to output an image only with a small amount of computation.

The first noise reduction module 100 may learn output data with reduced noise for the input data including a noise according to the above-described method and if the input image is input, the first image with reduced color noise and luminance noise from the input image according to the learning result may be output.

The first color space conversion module 200 may acquire a second image converted from the first image so as to have a YCbCr color space. The first image may have an RGB color space and have a value for a coordinate of each of R, G, and B. The first color space conversion module 200 may convert a color space of the first image from an RGB color space into a YCbCr color space and the first image which is converted to have the YCbCr color space may be defined as a second image. In the YCbCr color space, color may be expressed with one luminance attribute (brightness) and two chrominance attributes (a chrominance attribute for blue and a chrominance attribute for red).

For example, the first color space conversion module 200 may convert a color space of the first image from the RGB color space into the YCbCr color space according to the following Equation 2, but is not limited thereto.$\begin{matrix}Y = {K}_{R} ⋅ R + {K}_{G} ⋅ G + {K}_{B} ⋅ B , \\ {C}_{b} = 1 / 2 ⋅ \left(B-Y\right) / \left(1-{K}_{B}\right) , \\ {C}_{r} = 1 / 2 ⋅ \left(R-Y\right) / \left(1-{K}_{R}\right) .\end{matrix}$

Y is a luminance attribute, C_{b} is a chrominance attribute for blue, Cᵣ is a chrominance attribute for red, K_{R} is a coefficient for red, K_{G} is a coefficient for green, and K_{B} is a coefficient for blue. However, a method of allowing the first color space conversion module 200 to convert the RGB color space into the YCbCr color space is not limited thereto.

The second color space conversion module 300 may acquire a third image converted from the input image so as to have only a luminance attribute, among attributes of the YCbCr color space. The input image may have an RGB color space and have a value for a coordinate of each of R, G, and B. The second color space conversion module 300 may convert a color space of the input image from the RGB color space into the YCbCr color space, but convert the color space so as to have only the luminance attribute Y and the input image converted so as to have only the luminance attribute may be defined as a third image.

For example, the second color space conversion module 300 may convert the input image so as to have only the luminance attribute according to the following Equation 3, but is not limited thereto.$Y = {K}_{R} ⋅ R + {K}_{G} ⋅ G + {K}_{B} ⋅ B .$

Y is a luminance attribute, K_{R} is a coefficient for red, K_{G} is a coefficient for green, and K_{B} is a coefficient for blue. However, a method of allowing the second color space conversion module 300 to convert an input image having the RGB color space so as to have only the luminance attribute is not limited thereto.

In the meantime, even though it has been described that the first color space conversion module 200 and the second color space conversion module 300 are separate configurations, two modules may be the same configuration.

The second noise reduction module 400 may acquire a fourth image in which a noise of a third image is reduced.

The third image is an image having only a luminance attribute in the YCbCr color space.

The second noise reduction module 400 may output a fourth image obtained by reducing a luminance noise of the input third image in the YCbCr color space.

Accordingly, the fourth image also has only the luminance attribute in the YCbCr color space.

The second noise reduction module 400 may be trained using a learning dataset in which "an image converted from an original image including a noise so as to have only a luminance attribute in the YCbCr color space" and "an image converted from an image with a luminance noise reduced from the original image so as to have only a luminance attribute in the YCbCr color space" are paired.

In another exemplary embodiment, the second noise reduction module 400 may be trained using a learning dataset in which "an image obtained by adding a noise to the original image and "an original image" are paired.

In another exemplary embodiment, the second noise reduction module 400 may be trained using a learning dataset in which "an image converted from an image in which a noise is added to an original image including a noise so as to have only a luminance attribute in the YCbCr color space" and "an image converted from an image with a luminance noise reduced from the original image so as to have only a luminance attribute in the YCbCr color" space are paired.

Specifically, a noise to be added to the original image may be a structural noise (for example, a structural noise with a size determined based on a standard deviation between "the original image" and the "image obtained by reducing a noise from the original image").

In the related art, a random noise was added to the original image using a method of adding a noise as much as a specific variance to each channel of the original image. However, in a noise included in an actually used image, a structural noise appears more frequently than a random noise. Accordingly, the method of adding a random noise has a difficulty in reflecting a structural noise pattern of the actually used image.

Therefore, according to another exemplary embodiment of the present disclosure, the noise size is adjusted based on the standard deviation of the original image and the image obtained by reducing a noise from the original image to add a structural noise to the original image.

In the real world, it is common for images to have structural noises. Accordingly, only a model which is trained with learning data which is degraded by adding the structural noise may effectively reduce a noise which may be actually included in the image. In contrast, as used in the related art, when a random noise is added, it does not significantly contribute to the improvement of the noise reduction performance.

Accordingly, as described above, when an image is generated by adding a structural noise to the original image, an effect of significantly improving a performance of the noise reduction module as compared with the image obtained by adding the random noise according to the related art can be expected.

A size of the noise added to the original image may be determined by the following Equation 4.$N = α \left(x-y\right) / σ + y .$

Here, N is a noise added to the original image, α is a value which is randomly extracted within a specific range, σ is a standard deviation of x - y, x is a luminance attribute value of the original image, and y is a luminance attribute value of an image denoised from the original image. Here, as the value of α is increased, the size of the noise is increased and more noises may be included in the original image.

Here, the second noise reduction module 400 learns an image obtained by adding an additional noise to the original image as input data to respond to various noise levels. That is, even though an image with a low image quality is input, an image which is effectively denoised may be output using the trained result.

When the third image having only the luminance attribute is input, the second noise reduction module 400 may output a fourth image which has a reduced luminance noise from the third image and has only the luminance attribute using the trained result.

Further, the second noise reduction module 400 may be a model which uses a structure of a dilated-residual U-net (DRUNet) model as a backbone.

In the meantime, the first noise reduction module 100 is a noise reduction module which is trained so as to reduce a noise of the image in the RGB color space and in contrast, the second noise reduction module 400 is a noise reduction module which is trained so as to reduce a noise (specifically, a luminance noise) of the image in the YCbCr color space.

The attribute combination module 500 may generate a fifth image with an additional noise reduced from the first image using the luminance attribute and the chrominance attribute of the second image and the luminance attribute of the fourth image.

The attribute combination module 500 may calculate a new luminance attribute by combining the luminance attribute of the second image and the luminance attribute of the fourth image according to a predetermined condition and generate a fifth image so as to have a calculated new luminance attribute and the chrominance attribute of the second image.

Specifically, the attribute combination module 500 may calculate the new luminance attribute by the following Equation 5.${Y}_{3} = {pY}_{1} + \left(1-p\right) {Y}_{2} .$

Y₃ is a new luminance attribute, p is a real number having a value in the range of 0 ≤ p ≤ 1, Y₁ is a luminance attribute of the second image, and Y₂ is a luminance attribute of the fourth image. That is, the new luminance attribute may be equal to or larger than a smaller value between the luminance attribute of the second image and the luminance attribute of the fourth image and equal to or smaller than a larger value therebetween.

Here, p is a coefficient determined between 0 and 1 and may have a value of 0 or 1.

If p = 0, the new luminance attribute may have the same luminance attribute as a luminance attribute of the fourth image and if p = 1, the new luminance attribute may have the same luminance attribute as the luminance attribute of the second image.

In addition, if p is not 0 or 1, but is a real number between 0 and 1, the new luminance attribute may have a luminance attribute in which the luminance attribute of the second image and the luminance attribute of the fourth image are combined according to a predetermined proportion.

In the meantime, the value of p may be determined by a user, but is not limited thereto.

The third color space conversion module 600 may acquire an output image converted from a fifth image so as to have an RGB color space. The fifth image may have a YCbCr color space and have a value for a coordinate of each of Y, Cb, and Cr. The third color space conversion module 600 may convert a color space of the fifth image from a YCbCr color space into an RGB color space and the fifth image which is converted into the RGB color space may be defined as an output image.

For example, the third color space conversion module 600 may convert a color space of the fifth image from the YCbCr color space into the RGB color space according to the following Equation 6, but is not limited thereto.$\begin{matrix}B = Y + 2 ⋅ {C}_{b} ⋅ \left(1-{K}_{B}\right) , \\ R = Y + 2 ⋅ {C}_{r} ⋅ \left(1-{K}_{R}\right) , \\ G = \left(Y-{K}_{R}⋅R-{K}_{B}⋅B\right) / {K}_{G} .\end{matrix}$

Y is a luminance attribute, C_{b} is a chrominance attribute for blue, Cᵣ is a chrominance attribute for red, K_{R} is a coefficient for red, K_{G} is a coefficient for green, and K_{B} is a coefficient for blue. However, a method of allowing the third color space conversion module 600 to convert the YCbCr color space into the RGB color space is not limited thereto.

In the meantime, even though it has been described that the first color space conversion module 200, the second color space conversion module 300, and the third color space conversion module 600 are separate configurations, the modules may be the same configuration.

FIG. 4 is a view for defining a color space and an attribute type corresponding to an image type according to an exemplary embodiment of the present disclosure.

Referring to FIG. 4, the input image is an image which is input to the first noise reduction module 100 and may have an RGB color space. That is, the input image may have a value for each of R, G, and B as an attribute and the values may be R₁, G₁, and B₁.

The first image is an image which is output with a noise from the input image reduced by the first noise reduction module 100 and may have the same RGB color space as the color space of the input image. That is, the input image may have a value for each of R, G, and B as an attribute and the values may be R₂, G₂, and B₂.

The second image is an image output from the first color space conversion module 200 and the first color space conversion module 200 may convert the first image so as to have a YCbCr color space to output a second image. That is, the second image may have a value of each of Y, Cb, and Cr as an attribute and the values may be Y₁, Cb₁, and Cr₁.

The third image is an image output from the second color space conversion module 300 and the second color space conversion module 300 may convert the input image so as to have only a luminance attribute, among attributes of the YCbCr color space to output a third image. That is, the third image may have a value of Y as an attribute and the value may be Y₂.

The fourth image is an image which is output with a noise of the third image reduced by the second noise reduction module 400 and may have the same YCbCr color space as the color space of the third image. That is, the fourth image may have a value of Y as an attribute and the value may be Y₃.

The fifth image is an image output from the attribute combination module 500 and the attribute combination module 500 may calculate a new luminance attribute using the luminance attribute of the second image and the luminance attribute of the fourth image and generate and output a fifth image having a new luminance attribute and the chrominance attribute of the second image. That is, the fifth image may have a value of each of Y, Cb, and Cr as an attribute and each value may be Y₄, Cb₁, and Cr₁.

The output image is an image output from the third color space conversion module 600 and the third color space conversion module 600 may convert the fifth image so as to have an RGB color space to output an output image. That is, the output image may have a value for each of R, G, and B as an attribute and the values may be R₃, G₃, and B₃.

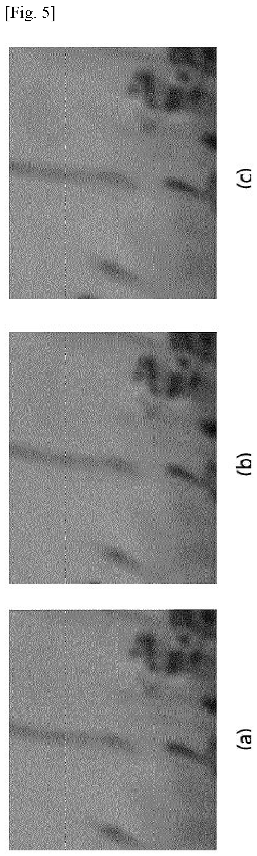

FIG. 5 is a view illustrating an input image and a noise reduction result according to an exemplary embodiment of the present disclosure.

At this time, (a) of FIG. 5 is a view illustrating an input image, (b) of FIG. 5 is a view illustrating a first image, and (c) of FIG. 5 is a view illustrating an output image.

Referring to FIG. 5, it can be confirmed that the input image includes a color noise and a luminance noise and the first image has a color noise and a luminance noise which are reduced as compared with the input image. Further, the output image has a luminance noise which is reduced more than that of the first image.

Accordingly, according to the exemplary embodiment of the present disclosure, a color noise and a luminance noise are primarily reduced from the input image and the reduced luminance noise is secondarily compensated to acquire an image in which the color noise and the luminance noise are effectively reduced.

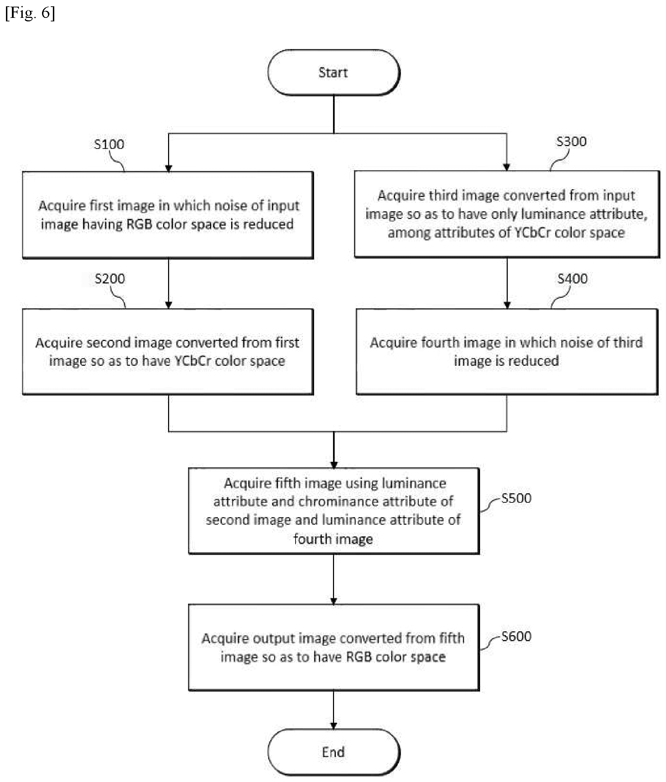

FIG. 6 is a view illustrating a deep learning-based image noise reduction method according to an exemplary embodiment of the present disclosure.

Referring to FIG. 6, the first noise reduction module 100 may acquire a first image in which a noise of an input image having an RGB color space is reduced in step S100. The first noise reduction module 100 may be a model which uses a structure of a dilated-residual U-net (DRUNet) model as a backbone.

The first noise reduction module 100 may be trained using a learning dataset in which "an original image which has an RGB color space and includes a noise" and "an image with a color noise and a luminance noise reduced from the original image" are paired.

Further, the first noise reduction module 100 may be trained using a learning dataset in which "an image obtained by adding a noise to the original image" and "an image with a color noise and a luminance noise reduced from the original image" are paired.

In another exemplary embodiment, the first noise reduction module 100 may be trained using a learning dataset in which "an image obtained by adding a noise to the original image and "an original image" are paired.

In another exemplary embodiment, the first noise reduction module 100 may be trained using a learning dataset in which "an image obtained by adding a noise to the original image again" and "an image with a color noise and a luminance noise reduced from the original image" are paired.

The input image has an RGB color space and when an input image having an RGB color space is input, the first noise reduction module 100 may output a first image which has an RGB color space and has a color noise and a luminance noise reduced from the input image using the trained result.

The first color space conversion module 200 may acquire a second image which is converted from the first image so as to have a YCbCr color space in step S200. The first image has an RGB color space and the first color space conversion module 200 may convert a color space of the first image from the RGB color space into the YCbCr color space.

The second color space conversion module 300 may acquire a third image converted from the input image so as to have only a luminance attribute, among attributes of the YCbCr color space in step S300. The input image has an RGB color space and the second color space conversion module 300 may convert a color space of the input image from the RGB color space into the YCbCr color space, so as to have only the luminance attribute

The second noise reduction module 400 may acquire a fourth image in which a noise of a third image is reduced in step S400. The second noise reduction module 400 may be a model which uses a structure of a dilated-residual U-net (DRUNet) model as a backbone.

The second noise reduction module 400 may be trained using a learning dataset in which "an image converted from an original image including a noise so as to have only a luminance attribute in the YCbCr color space" and "an image converted from an image with a luminance noise reduced from the original image so as to have only a luminance attribute in the YCbCr color space" are paired.

In another exemplary embodiment, the second noise reduction module 400 may be trained using a learning dataset in which "an image obtained by adding a noise to the original image and "an original image" are paired.

In another exemplary embodiment, the second noise reduction module 400 may be trained using a learning dataset in which "an image converted from an image in which a noise is added to an original image including a noise so as to have only a luminance attribute in the YCbCr color space" and "an image converted from an image with a luminance noise reduced from the original image so as to have only a luminance attribute in the YCbCr color space" are paired.

The third image has a YCbCr color space and when the third image having the YCbCr color space is input, the second noise reduction module 400 may output a fourth image which has a luminance noise reduced from the third image and has a YCbCr color space, using the trained result.

The attribute combination module 500 may acquire a fifth image with an additional noise reduced from the first image using the luminance attribute and the chrominance attribute of the second image and the luminance attribute of the fourth image in step S500.

The attribute combination module 500 may calculate a new luminance attribute by combining the luminance attribute of the second image and the second luminance attribute of the fourth image according to a predetermined condition and the new luminance attribute may be determined by the following Equation 7.${Y}_{3} = {pY}_{1} + \left(1-p\right) {Y}_{2} .$

Y₃ is a new luminance attribute, p is a real number having a value in the range of 0 ≤ p ≤ 1, Y₁ is a luminance attribute of the second image, and Y₂ is a luminance attribute of the fourth image. That is, the new luminance attribute may be equal to or larger than a smaller value between the luminance attribute of the second image and the luminance attribute of the fourth image and equal to or smaller than a larger value therebetween. Here, p is a coefficient determined between 0 and 1 and may have a value of 0 or 1. If p = 0, the new luminance attribute may have the same luminance attribute as a luminance attribute of the fourth image and if p = 1, the new luminance attribute may have the same luminance attribute as the luminance attribute of the second image. Further, if p is not 0 or 1, but is a real number between 0 and 1, the new luminance attribute may have a luminance attribute in which the luminance attribute of the second image and the luminance attribute of the fourth image are combined according to a predetermined proportion. In the meantime, the value of p may be determined by a user, but is not limited thereto.

The third color space conversion module 600 may acquire an output image converted from a fifth image so as to have an RGB color space in step S600. The fifth image may have a YCbCr color space and the third color space conversion module 600 may convert a color space of the fifth image from the YCbCr color space into the RGB color space.

As described above, according to the exemplary embodiments of the present disclosure, a deep learning-based image noise reduction device and method which output an image in which color noise and luminance noise included in an image are reduced using deep learning may be implemented.

Hereinabove, the exemplary embodiments of the present disclosure have been described with reference to the accompanying drawings, but those skilled in the art will understand that the present disclosure may be implemented in another specific form without changing the technical spirit or an essential feature thereof. Therefore, it should be understood that the above-described exemplary embodiments are illustrative in all aspects and do not limit the present disclosure.

### [Explanation of Reference Numerals and Symbols]

100: First noise reduction module
200: First color space conversion module
300: Second color space conversion module
400: Second noise reduction module
500: Attribute combination module
600: Third color space conversion module

## Claims

1. A deep learning-based image noise reduction device comprising:
a first noise reduction module for acquiring a first image in which a noise of an input image having an RGB color space is reduced;
a first color space conversion module for acquiring a second image converted from the first image so as to have a YCbCr color space;
a second color space conversion module for acquiring a third image converted from the input image so as to have only a luminance attribute, among attributes of the YCbCr color space;
a second noise reduction module for acquiring a fourth image in which a noise of the third image is reduced;
an attribute combination module for generating a fifth image in which an additional noise is reduced from the first image using a luminance attribute and a chrominance attribute of the second image and a luminance attribute of the fourth image; and
a third color space conversion module for acquiring an output image converted from the fifth image so as to have the RGB color space.

2. The deep learning-based image noise reduction device of claim 1, wherein the attribute combination module calculates a new luminance attribute by combining the luminance attribute of the second image and the luminance attribute of the fourth image according to a predetermined condition and generates the fifth image which is generated so as to have the new luminance attribute and the chrominance attribute of the second image.

3. The deep learning-based image noise reduction device of claim 2, wherein the new luminance attribute is equal to or larger than a smaller value between the luminance attribute of the second image and the luminance attribute of the fourth image and equal to or smaller than a larger value therebetween.

4. The deep learning-based image noise reduction device of claim 2, wherein the attribute combination module determines the new luminance attribute by the following Equation 1; ${Y}_{3} = {pY}_{1} + \left(1-p\right) {Y}_{2}$ (Y₃ is the new luminance attribute, p is a real number having a value in a range of 0 ≤ p ≤ 1, Y₁ is the luminance attribute of the second image, and Y₂ is the luminance attribute of the fourth image.).

5. The deep learning-based image noise reduction device of claim 1, wherein the first noise reduction module and the second noise reduction module are models which use a structure of a dilated-residual U-Net (DRUNet) model as a backbone.

6. The deep learning-based image noise reduction device of claim 1, wherein the first noise reduction module is a module which is trained using a learning dataset in which "an original image which has the RGB color space and includes a noise" and "an image with a color noise and a luminance noise reduced from the original image" are paired.

7. The deep learning-based image noise reduction device of claim 1, wherein the second noise reduction module is a module which is trained using a learning dataset in which "an image converted from an original image including a noise so as to have only the luminance attribute in the YCbCr color space" and "an image converted from an image with a luminance noise reduced from the original image so as to have only the luminance attribute in the YCbCr color space" are paired.

8. The deep learning-based image noise reduction device of claim 1, wherein the first noise reduction module is a module which is trained using a learning dataset in which "an image obtained by adding a noise to an original image which has the RGB color space and includes a noise" and "an image with a color noise and a luminance noise reduced from the original image" are paired.

9. The deep learning-based image noise reduction device of claim 1, wherein the second noise reduction module is a module which is trained using a learning dataset in which "an image converted from an image obtained by adding a noise to an original image including a noise so as to have only the luminance attribute in the YCbCr color space" and "an image converted from an image with a luminance noise reduced from the original image so as to have only the luminance attribute in the YCbCr color space" are paired.

10. The deep learning-based image noise reduction device of claim 1, wherein at least one of the first noise reduction module and the second noise reduction module is a module which is trained using a learning dataset in which "an image obtained by adding a noise to an original image including a noise" and "the original image" are paired.

11. A deep learning-based image noise reduction method which is performed by a computing device including a first noise reduction module, a second noise reduction module, a first color space conversion module, a second color space conversion module, an attribute combination module, and a third color space conversion module, the method comprising:
a step of acquiring a first image in which a noise of an input image having an RGB color space is reduced, in the first noise reduction module;
a step of acquiring a second image converted from the first image so as to have a YCbCr color space, in the first color space conversion module;
a step of acquiring a third image converted from the input image so as to have only a luminance attribute, among attributes of the YCbCr color space, in the second color space conversion module;
a step of acquiring a fourth image in which a noise of the third image is reduced, in the second noise reduction module;
a step of generating a fifth image with an additional noise reduced from the first image using a luminance attribute and a chrominance attribute of the second image and a luminance attribute of the fourth image, in the attribute combination module; and
a step of acquiring an output image converted from the fifth image so as to have the RGB color space, in the third color space conversion module.

12. The deep learning-based image noise reduction method of claim 11, wherein the step of acquiring a fifth image includes:
a step of calculating a new luminance attribute by combining the luminance attribute of the second image and the luminance attribute of the fourth image according to a predetermined condition; and
a step of generating the fifth image generated so as to have the new luminance attribute and the chrominance attribute of the second image.

13. The deep learning-based image noise reduction method of claim 12, wherein in the step of calculating a new luminance attribute, the new luminance attribute is equal to or larger than a smaller value between the luminance attribute of the second image and the luminance attribute of the fourth image and equal to or smaller than a larger value therebetween.

14. The deep learning-based image noise reduction method of claim 11, wherein in the step of calculating a new luminance attribute, the new luminance attribute is determined by the following Equation 1; ${Y}_{3} = {pY}_{1} + \left(1-p\right) {Y}_{2}$ (Y₃ is the new luminance attribute, p is a real number having a value in a range of 0 ≤ p ≤ 1, Y₁ is the luminance attribute of the second image, and Y₂ is the luminance attribute of the fourth image.).

15. The deep learning-based image noise reduction method of claim 11, wherein the first noise reduction module and the second noise reduction module are models which use a structure of a dilated-residual U-Net (DRUNet) model as a backbone.

16. The deep learning-based image noise reduction method of claim 11, wherein the first noise reduction module is a module which is trained using a learning dataset in which "an original image which has an RGB color space and includes a noise" and "an image with a color noise and a luminance noise reduced from the original image" are paired.

17. The deep learning-based image noise reduction method of claim 11, wherein the second noise reduction module is a module which is trained using a learning dataset in which "an image converted from an original image including a noise so as to have only the luminance attribute in the YCbCr color space" and "an image converted from an image with a luminance noise reduced from the original image so as to have only the luminance attribute in the YCbCr color space" are paired.

18. The deep learning-based image noise reduction method of claim 11, wherein the first noise reduction module is a module which is trained using a learning dataset in which "an image obtained by adding a noise to an original image which has the RGB color space and includes a noise" and "an image with a color noise and a luminance noise reduced from the original image" are paired.

19. The deep learning-based image noise reduction method of claim 11, wherein the second noise reduction module is a module which is trained using a learning dataset in which "an image converted from an image obtained by adding another noise to an original image including a noise so as to have only the luminance attribute in the YCbCr color space" and "an image converted from an image with a luminance noise reduced from the original image so as to have only the luminance attribute in the YCbCr color space" are paired.

20. The deep learning-based image noise reduction method of claim 11, wherein at least one of the first noise reduction module and the second noise reduction module is a module which is trained using a learning dataset in which "an image obtained by adding a noise to an original image including a noise" and "the original image" are paired.
